# EUROPÄISCHE PATENTANMELDUNG

(11) **EP 3 945 381 A1**
(43) Veröffentlichungstag der Anmeldung: **02.02.2022**
(21) Anmeldenummer: 20188968.0
(22) Anmeldetag: 31.07.2020
(51) Int. Cl.: G05B 19/408

(54) **HERSTELLUNG DURCH KEGELSEGMENTE BESTIMMBARER FLÄCHEN MITTELS EINER WERKZEUGMASCHINE**

(71) Anmelder: Siemens Aktiengesellschaft, 80333 München (DE)
(72) Erfinder: Bretschneider, Jochen, 88696 Owingen (DE); Immenroth, Lars, 08060 Zwickau (DE); Vieweg, André, 09112 Chemnitz (DE)

(57) **Zusammenfassung**

Die Erfindung betrifft ein Verfahren zur Herstellung und/oder Bearbeitung einer durch ein Segment eines Kegels (50, K) bestimmbaren, nicht konischen Fläche eines Werkstücks (5, 41, 43, W), insbesondere einer Dichtfläche eines mehrfach exzentrischen Absperrventils (40), mittels einer Werkzeugmaschine (20), wobei die Werkzeugmaschine (20) zum Erzeugen einer Relativbewegung zwischen einem Werkzeug (1, 60) und dem Werkstück (5, 41, 43, W) wenigstens zwei lineare Achsen (X, Y, Z) und wenigstens eine Rundachse (A, B, C) sowie eine numerische Steuerung (30) zur Ansteuerung der Achsen (X, Y, Z, A, B, C) aufweist, mit folgenden Schritten:
- Bereitstellen eines Zyklus (34) auf der numerischen Steuerung (30),
- Aufrufen des Zyklus (34) durch einen Benutzer der Werkzeugmaschine (20),
- Parametrieren des Zyklus (34) durch den Benutzer,
- Erzeugen eines von der numerischen Steuerung (30) abarbeitbaren Teileprogramms (33) mittels des Zyklus (34) und der numerischen Steuerung (30),
- Ausführung des Teileprogramms (33) mittels der numerischen Steuerung (30) zum Erzeugen der Relativbewegung entlang einer durch das Teileprogramm (33) bestimmten Bahn (70) zur Herstellung bzw. Bearbeitung der Fläche des Werkstücks (5, 41, 43, W).

## Beschreibung

Die Erfindung betrifft ein Verfahren zur Herstellung und/oder Bearbeitung einer durch ein Segment eines Kegels bestimmbaren, nicht konischen Fläche eines Werkstücks mittels einer Werkzeugmaschine, wobei die Werkzeugmaschine zum Erzeugen einer Relativbewegung zwischen einem Werkzeug und dem Werkstück wenigstens zwei lineare Achsen und wenigstens eine Rundachse sowie eine numerische Steuerung zur Ansteuerung der Achsen aufweist. Ferner betrifft die Erfindung einen Zyklus zur Durchführung eines derartigen Verfahrens, eine numerische Steuerung mit einem derartigen Zyklus sowie eine Werkzeugmaschine mit einer derartigen numerischen Steuerung.

Werkzeugmaschinen werden heutzutage mit Hilfe einer Steuereinrichtung, wie z.B. einer CNC-Steuerung, gesteuert. Dabei "steuert" die Steuereinrichtung anhand eines Teileprogramms die Bewegungen von Maschinenelementen und damit die Bewegungen eines Werkzeuges, welches beispielsweise über eine Werkzeughaltevorrichtung in die Maschine eingebracht wird, relativ zu einem Werkstück, welches ebenfalls in die Maschine eingebracht wird. Dabei ist dem Fachmann klar, dass es sich bei dem Begriff "steuern" um den üblichen Sprachgebrauch und nicht um "steuern" im Sinne der Regelungstechnik handelt. "Steuern" meint hier vor allem die Lageregelung von Achsen, wohinter sich Regelungsvorgänge im Sinne der Regelungstechnik verbergen.

Das Teileprogramm setzt sich dabei zumindest überwiegend aus Steuerbefehlen zusammen, die von der Steuereinrichtung eingelesen und interpretiert werden. Entsprechend den Steuerbefehlen steuert die Steuereinrichtung die Bewegungen der Maschinenelemente der Werkzeugmaschine und damit die Bewegung des Werkzeugs relativ zu dem Werkstück.

Zur Erstellung eines Teileprogramms werden dabei von einem CAM-System (Computer Aided Manufacturing) vorzugsweise in einem standardisierten Datenformat Bewegungsinformationen über durchzuführende Bewegungen des Werkzeugs erzeugt und von einem nachgeschalteten Postprozessor eingelesen. Der Postprozessor erzeugt anhand der vom CAM-System erzeugten Bewegungsinformationen, den Kinematik- und Maschinendaten der Werkzeugmaschine sowie dem Befehlssatz der CNC-Steuerung und dem Befehlssatz der PLC-Steuerung, ein für die jeweilige konkrete Werkzeugmaschine auf denen der Bearbeitungsvorgang stattfinden soll angepasstes Teileprogramm in Form von auf die konkrete Steuereinrichtung der Werkzeugmaschine angepassten Steuerbefehlen. Solchermaßen werden vom Postprozessor die vom CAM-System vorzugsweise in einem standardisierten Datenformat erzeugten Bewegungsinformationen in Steuerbefehle, die von der Steuereinrichtung eingelesen werden können und auf die jeweilige Steuereinrichtung angepasst sind, umgesetzt.

Der Postprozessor berücksichtigt dabei neben dem konkret verfügbaren CNC-Befehlssatz die konkreten maschinenspezifischen kinematischen Gegebenheiten der Werkzeugmaschine, wie z.B. Kinematik, geometrische Größenverhältnisse, maximale Verfahrbereiche der Antriebsachsen und Maximalgeschwindigkeiten der Maschinenelemente. Diese Daten liegen in Form von Maschinendaten vor. Weiterhin werden vom Postprozessor bei der Erzeugung der Steuerbefehle maschinenspezifische PLC-Funktionalitäten (Programmable Logic Control), wie z.B. Schmierung, Werkzeugwechsel, Türverriegelung etc. berücksichtigt, wobei die konkret verfügbaren PLC-Funktionalitäten in Form von PLC-Befehlssätzen dem Postprozessor zur Verfügung stehen.

Zyklen sind in der CNC-Steuerung hinterlegte Programme, die in Art eines Unterprogrammes aufgerufen werden können und sowohl die Programmierung als auch die Durchführung spezieller Bearbeitungen in bequemer Weise direkt an der Maschine, also ohne Rückgriff auf ein externes CAM-System, ermöglichen. Zumeist sind für die Programmierung bzw. Bearbeitung nur der Zyklen-Aufruf und die Eingabe einiger weniger Parameter durch den Benutzer erforderlich. Die CNC-Steuerung generiert oder parametriert dann selbsttätig das entsprechende Teileprogramm zur Bearbeitung des Werkstücks. Bekannt ist die Erstellung und Verwendung von Bohrzyklen, Fräszyklen oder Drehzyklen. Insbesondere sind Drehzyklen bekannt, mittels derer durch Angabe zweier Radien und einer Höhen-Angabe ein rotationssymmetrischer Konus an einem Bauteil, insbesondere einer Welle, gedreht werden kann.

Eine besondere Herausforderung bei der Bahngenerierung stellt die Erzeugung von Bewegungsbahnen für die Herstellung von Ventilsitzen oder Verschlüssen von Absperrventilen dar. Beispielsweise in der Chemischen Industrie, der Oil&Gas Industrie, oder der Water&Wastewater Industrie ist der Einsatz sogenannter Exzentrischer Absperrventile üblich. Dabei kommen neben 2-fach Offset Ventilen vermehrt 3-fach Offset Ventile (triple offset butterfly valves), aber auch 4-fach Offset Ventile zum industriellen Einsatz.

Durch die Exzentrizitäten weisen die Dichtflächen der Ventile eine komplizierte, insbesondere bzgl. einer Oberflächen-Normalen der betreffenden Bauteile bzw. einer Werkstückachse nicht rotationssymmetrische und damit nicht konische Oberflächen-Geometrie auf, zu deren Erzeugung bislang die Erstellung von Teileprogrammen in der eingangs aufgezeigten Weise mittels CAD/CAM-System und Postprozessor erforderlich sind.

Eine Aufgabe der vorliegenden Erfindung ist es, die Herstellung oder Bearbeitung von Dichtflächen bei mehrfach exzentrischen Absperrventilen zu vereinfachen.

Diese Aufgabe wird gelöst durch ein Verfahren zur Herstellung und/oder Bearbeitung einer durch ein Segment eines Kegels bestimmbaren, nicht konischen Fläche eines Werkstücks mittels einer Werkzeugmaschine, wobei die Werkzeugmaschine zum Erzeugen einer Relativbewegung zwischen einem Werkzeug und dem Werkstück wenigstens zwei lineare Achsen und wenigstens eine Rundachse sowie eine numerische Steuerung zur Ansteuerung der Achsen aufweist, mit folgenden Schritten:
- Bereitstellen eines Zyklus auf der numerischen Steuerung,
- Aufrufen des Zyklus durch einen Benutzer der Werkzeugmaschine,
- Parametrieren des Zyklus durch den Benutzer,
- Erzeugen eines von der numerischen Steuerung abarbeitbaren Teileprogramms mittels des Zyklus und der numerischen Steuerung,
- Ausführung des Teileprogramms mittels der numerischen Steuerung zum Erzeugen der Relativbewegung entlang einer Bahn zur Herstellung bzw. Bearbeitung der Fläche des Werkstücks.

Bei einer bevorzugten Ausführungsform der Erfindung erfolgt die Bearbeitung des Werkstücks in Form einer Drehbearbeitung. Die Erfindung ist jedoch nicht auf diese Ausführungsform beschränkt. Beispielsweise ist ebenso eine Fräsbearbeitung zur Herstellung des Werkstücks möglich.

Weiterhin ist die Erfindung nicht auf die spanabhebende Bearbeitung eines Werkstücks beschränkt, sondern es sind damit auch andere Bearbeitungen möglich, zum Beispiel eine materialauftragende Bearbeitung.

Die Erzeugung des von der numerischen Steuerung abarbeitbaren Teileprogramms kann direkt nach dem Aufruf des Zyklus und der Eingabe der erforderlichen Parameter durch den Bediener mittels des Zyklus und der numerischen Steuerung erfolgen. Weiterhin kann die Erzeugung des von der numerischen Steuerung abarbeitbaren Teileprogramms durch die Steuerung auch zur Laufzeit, d.h. während der Abarbeitung eines übergeordneten CNC-Programms zum Zeitpunkt des Aufrufs des Zyklus erfolgen.

Die Erfindung bietet den Vorteil, dass nun auch durch ein Segment eines Kegels bestimmbare, nicht konische Flächen mittels der sogenannten "werkstattorientierten Programmierung" direkt an der CNC-Steuerung, also ohne Rückgriff auf ein externes CAM-System, "programmiert" werden können. Es handelt sich dabei aber gerade nicht um eine Programmierung im klassischen Sinn, bei der Satz für Satz die Relativbewegung zwischen dem Werkzeug und dem Werkstück angegeben ("programmiert") werden muss, sondern der Vorgang beschränkt sich auf den Aufruf und die Parametereingabe (Parametrierung) des betreffenden Zyklus, durch den dann die abzufahrende Bahn zur Bearbeitung des Werkstücks automatisch durch die CNC-Steuerung generiert wird.

Weiterhin erlaubt es diese Vorgehensweise dem Maschinenbediener, einfach und situationsabhängig Anpassungen vorzunehmen, ohne dafür das CNC-Programm am externen Arbeitsplatz neu erstellen zu müssen. Beispiele solcher Anpassungen sind:
- Berücksichtigung der konkreten Aufspannung des Werkstücks z.B. durch Angabe von Offsets;
- Angabe von Werkzeugradius oder Werkzeugverschleiß;
- Einbeziehen der Dynamikwerte von beteiligten Achsen (z.B. maximale Drehzahl);
- Prüfen bzw. Festlegung des verfügbaren Arbeitsraumes für die Fertigung (z.B. Achsenlimitierungen);
- Prüfen bzw. Festlegen der richtigen Achsbezeichner (z.B. x, z, c1);

Weitere Vorteile dieser Art der werkstattorientierten Programmierung sind:
- Sämtliche Eingabeparameter des Zyklus im Teileprogramm sind für Dokumentationszwecke erhalten;
- Keine aufwendige Arbeitsvorbereitung notwendig.

Ein Kegel ist definitionsgemäß ein geometrischer Körper, der entsteht, wenn man alle Punkte eines in einer Ebene liegenden, begrenzten und zusammenhängenden Flächenstücks geradlinig mit einem Punkt (der Spitze) außerhalb der Ebene verbindet.

Das Flächenstück nennt man Grundfläche, deren Begrenzungslinie die Leitkurve und den Punkt die Spitze oder den Scheitel des Kegels. Ein Kegel hat also eine Spitze (den Scheitelpunkt), eine Kante (die Leitkurve) und zwei Flächen (die Mantel- und die Grundfläche). Ist das Flächenstück (die Grundfläche) eine Kreisscheibe, wird der so gebildete Körper Kreiskegel genannt. Die Grundfläche kann jedoch beliebig, insbesondere auch nicht kreisförmig oder nicht elliptisch ausgebildet sein.

Man unterscheidet insbesondere zwischen Kegeln mit kreisförmiger Grundfläche und senkrecht durch den Mittelpunkt der Grundfläche verlaufender Höhen-Linie (gerade Kreiskegel bzw. Drehkegel) oder Kreiskegeln mit kreisförmiger Grundfläche, deren Höhen-Linie den Kreismittelpunkt nicht umfasst (schiefer Kreiskegel oder elliptischer Kegel).

Als "konische Fläche" oder kurz Konus wird eine rotationssymmetrische Fläche verstanden, die der Form der Mantelfläche eines Kegelstumpfes eines geraden Kreiskegels (Drehkegels) entspricht.

Als "Segment eines Kegels" (Kegelsegment) im Sinne der Erfindung wird jede beliebige Fläche auf der Mantelfläche eines Kegels verstanden.

Für viele technische Anwendungen und insbesondere Anwendungen im Zusammenhang mit der Erfindung ist insbesondere die Herstellung bzw. Bearbeitung solcher Flächen interessant, die sich durch Segmente schiefer Kegel, insbesondere schiefer Kreiskegel, bestimmen lassen.

Darüber hinaus ist im Zusammenhang mit der Erfindung auch die für viele technische Anwendungen interessante Herstellung bzw. Bearbeitung solcher Flächen hervorzuheben, die durch ein Segment eines Kegels, insbesondere eines geraden Kreiskegels, mit einer Höhen-Linie, die nicht parallel zu einer Werkstück-Normalen ausgerichtet ist, bestimmbar sind. Der betreffende Kegel ist damit nicht parallel zu dem Werkstück (zu einer Oberflächen-Normalen des Werkstücks) ausgerichtet, sondern diesem gegenüber im Raum geschwenkt ("gedreht"). Obwohl bei einem derartigen Schnitt eines geraden Kreiskegels mit einem Werkstück somit alle Schnittpunkte auf der Mantelfläche des geraden Kreiskegels, und damit eines rotationssymmetrischen Körpers, liegen, entsteht bei dem Werkstück eine nicht rotationssymmetrische und damit auch nicht konische (Schnitt-) Fläche.

Die Erzeugung einer "nicht konischen Fläche" des Werkstücks im Sinne der Erfindung kann also daraus resultieren, dass der betreffende Kegel selbst nicht rotationssymmetrisch ist, z.B. ein schiefer Kegel, oder aber dass zwar der Kegel rotationssymmetrisch ist (also ein Drehkegel), dieser jedoch gegenüber dem Werkstück - wie oben beschrieben - im Raum geschwenkt ist.

Schneidet man einen Kegel durch 2 Ebenen, so wird der dazwischen liegende Teil der Mantelfläche nachfolgend als ringförmig geschlossenes Kegelsegment bezeichnet. Die beiden Ebenen und das Kegelsegment bilden demnach eine zusammenhängende geschlossene Fläche. Die beiden Ebenen erzeugen auf der Mantelfläche des Kegels ein in sich geschlossenes Band.

Für technische Anwendungen sind insbesondere solche ringförmig geschlossenen Kegelsegmente interessant, die sich aus dem Schnitt eines Kegels mit zwei parallelen Ebenen ergeben.

Die Erfindung ist jedoch nicht auf die oben genannten, bevorzugten geometrischen Varianten von Kegelsegmenten beschränkt, sondern prinzipiell für beliebige, durch ein Segment eines Kegels bestimmbare (geometrisch beschreibbare), nicht konische Flächen anwendbar.

Aus mathematischer Sicht lässt sich jede für eine erfindungsgemäße Herstellung oder Bearbeitung vorgesehene Fläche durch die Geometrie des betreffenden Kegels betreffende Angaben sowie die Größe und Position der Fläche auf der Mantelfläche des Kegels betreffende Angaben durch entsprechende Benutzereingaben direkt an der Steuerung festlegen.

Vorteilhaft ist im Zusammenhang mit der Erfindung die geometrische Beschreibung der betreffenden Fläche des fertigen Werkstücks (also der Werkstück-Oberfläche) ausreichend, damit der Zyklus daraus das passende Teileprogramm generieren kann. Ist beispielsweise die Herstellung einer gewünschten Fläche (Werkstück Oberfläche) nicht in einem Arbeitsschritt möglich, z.B. weil die mit dem verwendeten Werkzeug größtmögliche Zustellung dies nicht zulässt, so erledigt die CNC-Steuerung in Verbindung mit dem Zyklus - in an sich bekannter Weise - selbsttätig die Aufteilung in mehrere Arbeitsschritte.

Das erfindungsgemäße Verfahren eignet sich insbesondere zur Bearbeitung bzw. Herstellung einer Dichtfläche eines Verschlussteils oder eines Ventilsitzes (dem entsprechenden Gegenstück zum Verschlussteil) eines Absperrventils. Als Werkstück-Rohteil für einen derartigen Ventilsitz wird zumeist ein hohlzylinderförmiges Metallteil und für den Verschluss ein zylinderförmiges Metallteil verwendet.

Die Vorteile der Erfindung kommen besonders deutlich zum Tragen, wenn es sich bei dem Absperrventil um ein exzentrisches, insbesondere mehrfach exzentrisches Absperrventil, z.B. ein dreifach exzentrisches Absperrventil (triple offset butterfly valve) handelt. Durch die komplizierte geometrische Form der Dichtflächen derartiger Ventile ist es nicht mehr möglich, die zur Bearbeitung erforderlichen Bahnen "händisch" zu programmieren. Ohne die Erfindung könnten die erforderlichen Teileprogramme daher nicht mehr auf der CNC-Steuerung selbst, sondern nur noch auf einem externen CAM-System von darauf geschulten Experten erstellt werden.

Für die Herstellung der Dichtflächen eines mehrfach exzentrischen Absperrventils durch eine Dreh-Bearbeitung gibt es mehrere unterschiedliche Möglichkeiten, die auch vom Typ der verwendeten Maschine abhängig sind.

Einerseits kann eine zum Erzeugen der Exzentrizität erforderliche Ausgleichsbewegung radial in einer Linearachse erfolgen und entsprechend programmiert werden.

Vorzugsweise wird bei dieser Ausführungsform das Teileprogramm im Polarkoordinaten-Format erzeugt. Neben der genannten Linearachse sind als weitere Achsen noch die Zustellachse (Z-Richtung) sowie eine Rundachse erforderlich. Die Bearbeitung ist also mit einer verhältnismäßig einfachen 3-Achs-Maschine möglich.

Eine andere Variante sieht eine zum Erzeugen der Exzentrizität erforderliche Ausgleichsbewegung radial in zwei Linearachsen vor. Das Teileprogramm wird dabei vorteilhaft im kartesischen Format erzeugt, inklusive Orientierung, wofür eine aktive Transformation zugrunde liegen muss.

Die Werkzeugmaschine muss dabei folgende Kinematik aufweisen:
- Eine positionierbare Rundachse
- Eine Linearachse kollinear zur Rundachse (Vorschubbewegung)
- Eine Linearachse radial zur Rundachse (Zustellbewegung/Ausgleichsbewegung)
- Eine Linearachse radial zur Rundachse (Zustellbewegung/Ausgleichsbewegung)

Es ist also zumindest eine 4-Achs-Maschine zur Durchführung der Bearbeitung erforderlich.

Die für eine Fertigung der Dichtfläche notwendigen geometrischen Informationen werden vorteilhaft über eine Zyklenmaske vom Bediener in die CNC-Steuerung eingegeben.

Die eingangs gestellte Aufgabe wird ferner gelöst durch einen Zyklus für eine numerische Steuerung zur Durchführung eines Verfahrens nach Anspruch 14.

Die eingangs gestellte Aufgabe wird ferner gelöst durch eine numerische Steuerung zur Ausführung eines Zyklus gemäß Anspruch 15.

Die eingangs gestellte Aufgabe wird weiterhin gelöst durch eine Werkzeugmaschine mit einer numerischen Steuerung gemäß Anspruch 16.

Die Erfindung wird nachfolgend anhand von Ausführungsbespielen näher erläutert. Dabei zeigen:
- FIG 1: Eine Werkzeugmaschine zur Durchführung eines erfindungsgemäßen Verfahrens,
- FIG 2: ein dreifach exzentrisches Absperrventil,
- FIG 3: ein dreifach exzentrisches Absperrventil in schematischer Darstellung,
- FIG 4: eine Drehbearbeitung einer Dichtfläche eines aus den Figuren 2 und 3 ersichtlichen, dreifach exzentrischen Absperrventils mit einer Ausgleichsbewegung durch eine Linearachse der Werkzeugmaschine,
- FIG 5: einige bei dem Zyklenaufruf abgefragte, die Geometrie der Dichtfläche betreffende Parameter,
- FIG 6: eine aus einer Vielzahl direkt aneinandergrenzender Splines zusammengesetzte Werkzeugbahn,
- FIG 7: Darstellung von Punkten auf Ellipsensegmenten zur Splinebildung,
- FIG 8: ein Splinesegmente für eine Umdrehung,
- FIG 9: Verfahrensschritte bei der Durchführung eines erfindungsgemäßen Verfahrens.

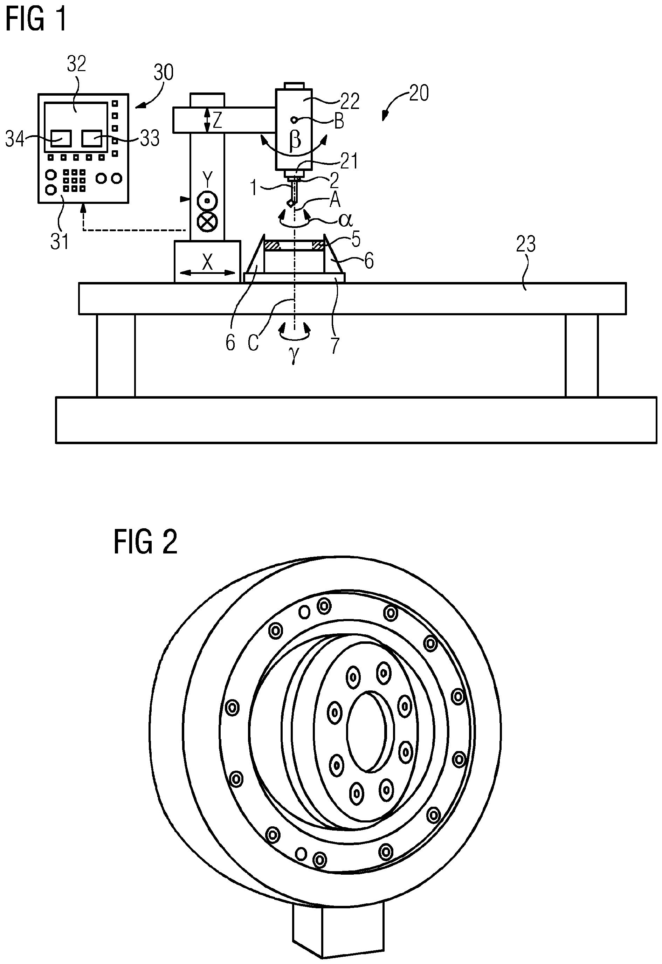

In FIG 1 ist schematisiert eine Werkzeugmaschine 20 dargestellt. Die Werkzeugmaschine 20 verfügt im Rahmen des Ausführungsbeispiels über sechs Maschinenachsen, durch die eine Relativbewegung zwischen einem Werkzeug 1, das im Rahmen des Ausführungsbeispiels in Form eines Drehmeißels 1 vorliegt, und einem Werkstück 5, im Ausführungsbeispiel angedeutet als Ventilsitz 5 eines mehrfach exzentrischen Absperrventils, durchgeführt werden kann. Das Werkzeug 1 ist dabei in einen Werkzeughalter 2 eingespannt, der mit einer Werkzeugspindel 21 verbunden ist, die von einem lagegeregelten Motor 22 angetrieben wird. Das Werkstück 5 ist durch Spannmittel 6 an einem Werkstücktisch 7 befestigt.

Der Drehmeißel 1 lässt sich mit der im Ausführungsbeispiel gezeigten Maschine 20 mit der Übersichtlichkeit halber in FIG 1 nicht dargestellten Antrieben in X-, Y- und Z-Richtung lagegeregelt translatorisch bewegen. Neben den drei Linearachsen umfasst die gezeigte Werkzeugmaschine 20 ferner die beiden, ebenfalls aus FIG 1 ersichtlichen lagegeregelten Rundachsen A und B, mit denen das Werkzeug 1 um die jeweilige Achse gedreht und ebenfalls lagegeregelt durch die Winkellagen α und β relativ zu dem Werkstück 5 ausgerichtet werden kann.

Darüber hinaus verfügt die Maschine 20 über eine dritte lagegeregelte Rundachse C, die parallel zur Z-Achse verläuft, und bezüglich der der Werkstücktisch 7 relativ zu einem ruhenden Maschinengestell 23 drehbar gelagert ist. Dadurch kann das Werkstück 5 auch in einer Winkellage γ relativ zu dem Werkzeug 1 positioniert werden. Auch hier wurde der Übersichtlichkeit halber auf eine Darstellung des Antriebs verzichtet.

Abhängig von der durchzuführenden Bearbeitung ist bei der gezeigten Werkzeugmaschine 20 auch ein drehzahlgeregelter Betrieb bezüglich der Rundachsen A und/oder C möglich.

Die Werkzeugmaschine 20 gemäß dem Ausführungsbeispiel weist somit sechs Maschinenachsen (die 3 Linearachsen X, Y und Z sowie die 3 Rundachsen A, B und C) auf, d.h. es handelt sich um eine sogenannte 6-achsige Werkzeugmaschine (6-Achs-Maschine) 20.

Es sei an dieser Stelle angemerkt, dass die Werkzeugmaschine 20 selbstverständlich auch noch mehr, aber auch weniger als sechs Maschinenachsen aufweisen kann.

Die Werkzeugmaschine 20 ist mit einer numerischen Steuerung 30 verbunden, die anhand eines Teileprogramms 33 und/oder einer Handbedieneingabe Lagesollwerte x, y, z, α, β und γ zur Steuerung einer zwischen dem Werkzeug 1 und dem Werkstück 5 stattfindenden Relativbewegung ermittelt. Die numerische Steuerung 30 ermittelt die Lagesollwerte anhand des Teileprogramms 33, in dem die vom Werkzeug 1 in Bezug zum Werkstück 5 durchzuführende Bewegung in Form von Befehlen definiert ist. Alternativ oder zusätzlich kann die Bewegung des Werkzeugs 1 und/oder das Werkstücks 5 auch mittels einer Handbedieneingabe über eine Bedieneinrichtung 31 in Verbindung mit einer Anzeigevorrichtung 32 der numerischen Steuerung 30 von einem Bediener vor Ort an der Werkzeugmaschine 20 vorgegeben werden. Die Bedieneinrichtung 31 weist hierzu insbesondere Eingabefelder, Tasten und Drehregler auf.

Das Teileprogramm 33 wird dabei üblicherweise von einem externen CAM/CAD-System (nicht dargestellt) und einem eventuell dem CAM/CAD-System nachgeschalteten sogenannten Postprozessor (nicht dargestellt) außerhalb der numerischen Steuerung 30 erzeugt und von dort auf die numerische Steuerung 30 übertragen.

Bei der Abarbeitung des Teileprogramms 33 erzeugt die numerische Steuerung 30 in einem bestimmten Takt, dem Interpolationstakt, sowohl Lagesollwerte x, y und z für die Linearachsen als auch α, β und γ (Winkellagen) für die Rundachsen. Durch diese Lagesollwerte wird das Werkzeug 1 mit vorgegebener Orientierung relativ zu dem Werkstück 5 entlang einer Bewegungsbahn bewegt.

Gemäß der Erfindung ist auf der numerischen Steuerung 30 gemäß dem Ausführungsbeispiel ein Zyklus 34 zur Herstellung und/oder Bearbeitung nicht konischer Flächen des Werkstücks 5 vorhanden, die durch ein Segment eines Kegels bestimmbarer, das heißt mathematisch beschreibbar, sind. Wie in der Figur angedeutet ist, handelt es sich bei dem Werkstück 5 im Ausführungsbeispiel um einen Ventilsitz 5 eines dreifach exzentrischen Absperrventils. Durch eine entsprechende Parametrierung des Zyklus 34, auf die später noch näher eingegangen wird, ist die gewünschte Bearbeitung, insbesondere Drehbearbeitung der Dichtfläche möglich.

Neben der genannten Drehbearbeitung des Ventilsitzes 5 ließe sich mit der gezeigten 6-Achs-Maschine ebenso beispielsweise eine Fräsbearbeitung des Ventilsitzes 5 durchführen, bei der das Werkzeug 1 als um die Spindelachse A rotierender Fräser (nicht dargestellt) ausgebildet ist, der in X-, Y- und Z-Richtung lagegeregelt positioniert wird und bei der der Ventilsitz 5 vorzugsweise ortsfest befestigt ist. Der Antrieb des Fräsers durch den Motor 22 und die Spindel 21 würde dabei drehzahlgeregelt erfolgen.

FIG 2 zeigt ein dreifach exzentrisches Absperrventil (triple offset butterfly valve), wie es beispielsweise in der Chemischen Industrie, der Oil&Gas Industrie, oder der Water&Wastewater Industrie zum Einsatz kommt. Eine besondere Herausforderung dieser Ventile stellt die Herstellung der erforderlichen Dichtflächen, wie beispielsweise des in FIG 1 angedeuteten Ventilsitzes, dar. Die Erstellung von Teileprogrammen für Werkzeugmaschinen zur Herstellung dieser Dichtflächen war bislang nur mittels CAD/CAM-Systemen möglich.

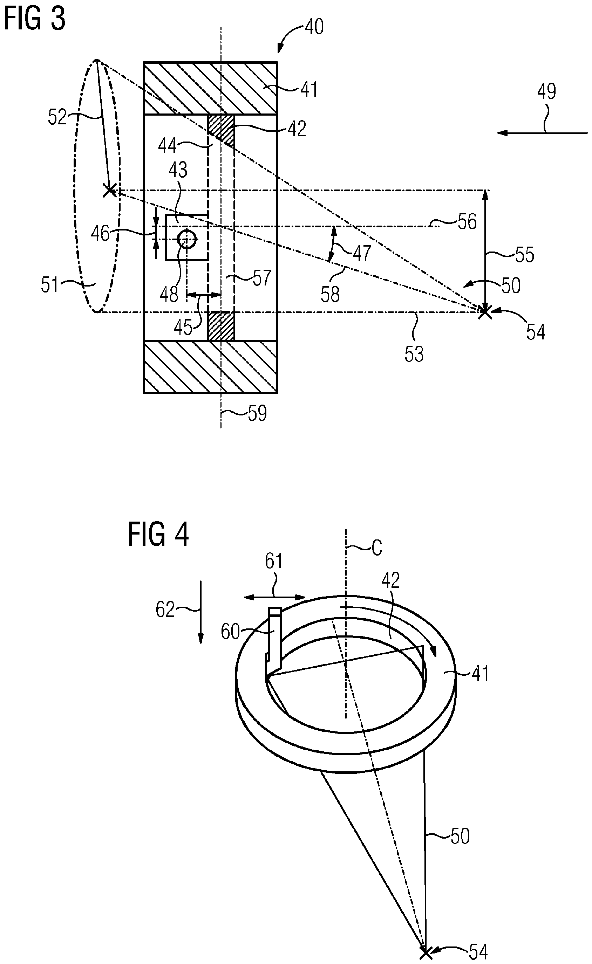

FIG 3 veranschaulicht ein dreifach exzentrisches Absperrventil 40 in einer schematischen Darstellung. Aus der Figur sind der Ventilsitz 41 des Absperrventils 40 mit der Dichtfläche 42 ersichtlich. Ferner ist das drehbar gelagerte Verschlussteil 43 des Absperrventils 40 mit der Dichtfläche 44 ersichtlich.

Die Geometrie der Dichtflächen 42 und 44 lässt sich anhand eines ebenfalls beispielhaft aus FIG 3 ersichtlichen, schiefen Kreiskegels 50 mit der Grundfläche 51, dem Radius 52, der Höhe 53, der Spitze 54 und der Abweichung 55 beschreiben. Durch die beiden parallelen Oberflächen des Ventilsitzes 41 und das Verschlussteils 43 ergibt sich als Schnittmenge auf der Mantelfläche des Kegels 50 ein ringförmig geschlossenes Kegelsegment 57. Die Dichtflächen 42 und 44 liegen auf diesem ringförmig geschlossenen Kegelsegment 57 der Mantelfläche des Kegels 50 und lassen sich daher mathematisch exakt beschreiben.

Weiterhin sind FIG 3 die drei Exzentrizitäten des Absperrventils 40 zu entnehmen. Eine erste Exzentrizität 45 resultiert aus einem Versatz eines Drehpunktes 48 des Verschlussteils 43 gegenüber einer ersten, in vertikaler Richtung verlaufenden Mittellinie 59 des Absperrventils 40 in Durchströmungsrichtung 49 des Absperrventils 40. Eine zweite Exzentrizität 46 resultiert aus einem Versatz des Drehpunktes 48 des Verschlussteils 43 gegenüber einer zweiten, in horizontaler Richtung verlaufenden Mittellinie 56 des Absperrventils 40 in einer Richtung senkrecht zur Durchströmungsrichtung 49 des Absperrventils 40. Eine dritte Exzentrizität entspricht einem Winkel 47 zwischen der zweiten, horizontalen Mittellinie 56 des Absperrventils 40 und einer durch den Mittelpunkt der Grundfläche des Kegels 50 und der Spitze 54 des Kegels 50 verlaufenden Kegel-Achse 58.

FIG 4 veranschaulicht die Drehbearbeitung des Ventilsitzes 41 (dargestellt ist nur der für die Bearbeitung wesentliche, im Wesentlichen hohlzylinderförmige Teil des Ventilsitzes 41) des dreifach exzentrisches Absperrventils 40 gemäß FIG 3. Zur Bearbeitung rotiert der Ventilsitz 41 (entsprechend dem Werkstück 5 aus FIG 1) mit vorzugsweise konstanter Winkelgeschwindigkeit um die Rotationsachse C (siehe auch FIG 1) und ein in wenigstens zwei Linearachsen verstellbarer Drehmeißel 60 (entsprechend dem Werkzeug 1 aus FIG 1) führt eine spanabhebende Bearbeitung aus. Ersichtlich ist eine Ausgleichsbewegung des Drehmeißels 60 zum Ausgleich der oben genannten Exzentrizitäten entlang einer ersten Linearachse 61, zum Beispiel der aus FIG 1 ersichtlichen X-Achse, wobei die Ausgleichsbewegung synchron mit der Drehbewegung (Rotation) des Ventilsitzes 41 pro Umdrehung des Ventilsitzes 41 erfolgt. Weiterhin ist eine zweite Linearachse 62 für die Zustellbewegung des Drehmeißels 60 ersichtlich, beispielsweise die aus FIG 1 ersichtliche Z-Achse.

Neben der oben bereits genannten, konstanten Winkelgeschwindigkeit der Rotation um die Rotationsachse C kommt prinzipiell eine beliebige, auch zeitlich veränderliche Winkelgeschwindigkeit in Betracht. Bei einer bevorzugten Ausführungsform wird die Winkelgeschwindigkeit der Rotation - in an sich bekannter Weise - derart bestimmt, dass sich eine konstante Schnittgeschwindigkeit ergibt.

Gemäß der Erfindung wird für die entsprechende Bearbeitung des Ventilsitzes 41 auf der CNC-Maschine ein entsprechender Zyklus gestartet und ausgeführt. Die Bearbeitung wird vorzugsweise beginnend an einem hohlzylinderförmigen Werkstück-Rohteil ausgeführt.

Die für eine Fertigung der Dichtflächen notwendigen geometrischen, aber auch die fertigungstechnischen Informationen werden dabei besonders komfortabel über eine an einem HMI-Bildschirm der CNC-Steuerung angezeigte Zyklenmaske vom Bediener abgefragt. Alternativ könnte der Fertigungszyklus auch mit händischer Eingabe der Parameter im Teileprogramm erfolgen (ohne HMI-Maske).

Die nachfolgende Tabelle 1 erhält einen exemplarischen Überblick über interaktiv editierbare Parameter an der CNC-Steuerung, die nach einem entsprechenden Zyklenaufruf mittels der Zyklenmaske abgefragt werden können. Neben einer bevorzugten Bezeichnung des jeweiligen Parameters sind aus der Tabelle 1 ebenfalls eine kurze Beschreibung und ggf. eine Maßeinheit des betreffenden Parameters ersichtlich. Abhängig von der Beschreibungsform können die jeweils notwendigen konkreten Parametereingaben variieren bzw. sich aus anderen, hier nicht genannten Angaben ableiten lassen.

**Tabelle 1: Eingabeparameter für den Bearbeitungszyklus auf der CNC Steuerung.**

| **Parameter** | **Beschreibung** | | **Einheit** |
|---|---|---|---|
| PRG | • Programmname | | |
| | Name des zu generierten Programms | | |
| RAX | • Rundachse | | |
| | Rundachse auf welcher das Werkstück aufgespannt ist | | |
| IAX | • Zustellachse | | |
| | Linearachse welche radial die exzentrische Ausgleichsbewegung zur Drehmitte abbildet | | |
| MAX | • Bearbeitungsachse | | |
| | Linearachse welche die Zustellbewegung entlang der Kegelmantelfläche (Umdrehungsvorschub) abbildet | | |
| Konturbezug | Mit diesem Parameter kann der Konturbezug definiert werden | | |
| | • Innen | | |
| | Die Bearbeitung erfolgt innerhalb des definierten Kegels, typischerweise für das Gehäuse | | |
| | • Außen | | |
| | Die Bearbeitung erfolgt außerhalb des definierten Kegels, typischerweise für das Ventil | | |
| Bearbeitung | • Bearbeitungsrichtung legt fest in Welche Richtung die Rundachse (RAD) rotiert, diese sollte passend zur Drehmeißel Ausrichtung gewählt werden | | |
| Format | • Polar | | |
| | • kartesisch | | |
| RP | • Rückzugsebene | | mm |
| | | Bei der Bearbeitung fährt das Werkzeug im Eilgang vom Werkzeugwechselpunkt zur Rückzugsebene und anschließend zum Sicherheitsabstand. Auf dieser Höhe wird in den Bearbeitungsvorschub umgeschaltet. Nach abgeschlossener Bearbeitung fährt das Werkzeug im Bearbeitungsvorschub aus dem Werkstück bis auf Höhe des Sicherheitsabstandes. Vom Sicherheitsabstand zur Rückzugsebene und weiter zum Werkzeugwechselpunkt wird im Eilgang verfahren. | |
| | • Die Rückzugsebene wird absolut eingegeben. | | |
| | | Der Bezugspunkt Z0 und die Rückzugsebene RP haben in der Regel unterschiedliche Werte. Der Zyklus geht davon aus, dass die Rückzugsebene vor dem Bezugspunkt liegt. | |
| sc | • Sicherheitsabstand | | mm |
| | | Der Sicherheitsabstand legt fest, wie groß der Abstand zum Material ist, der nicht mehr mit Eilgang gefahren wird. Der Zyklus legt die Wirkrichtung des Sicherheitsabstands automatisch fest. In der Regel wirkt der Sicherheitsabstand in mehrere Richtungen. | |
| | • Der Sicherheitsabstand wird inkremental (ohne Vorzeichen) eingegeben. | | |
| s | Bearbeitungsdrehzahl | | 1/min |
| SR | Reduzierte Drehzahl für das Anfahren | | 1/min |
| Z0 | • Bezugspunkt | | mm |
| | Bezugspunkt in Z | | |
| Z1 | • Endtiefe | | mm |
| | Tiefe bezogen auf Z0 | | |
| F | Bearbeitungsvorschub | | mm/u |
| DCX | Abstand zwischen Rotationsachse zu Kegelspitze | | mm |
| DCZ | Abstand der Kegelspitze zu Z0 | | mm |
| DCE1 | Abstand der Kegelecke 1 | | mm |
| DCE2 | Abstand der Kegelecke 2 | | mm |

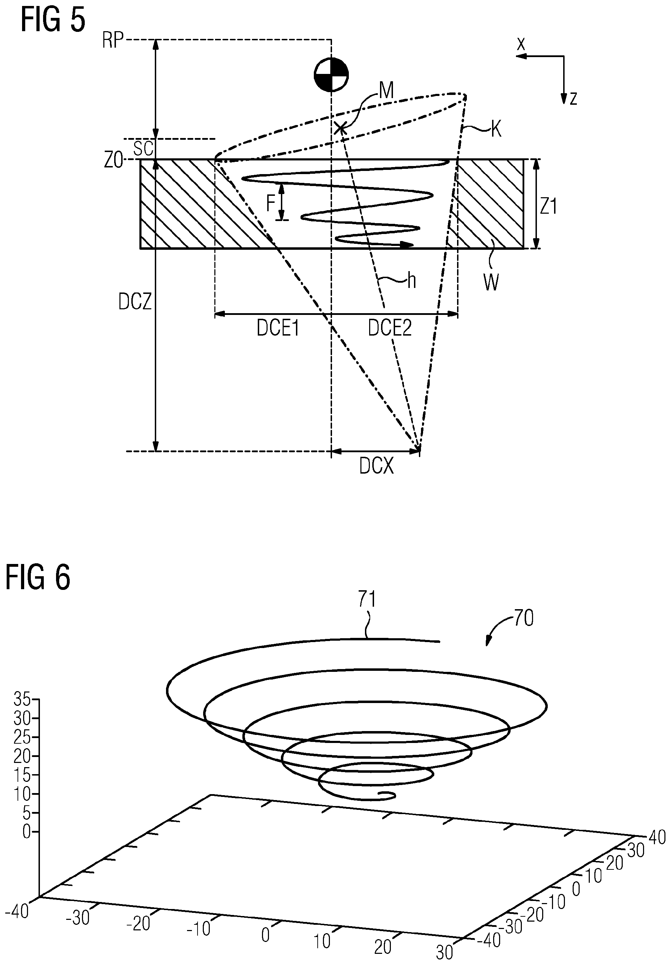

FIG 5 veranschaulicht grafisch einige der bei dem Zyklenaufruf abgefragten und aus der Tabelle 1 ersichtlichen Parameter.

Durch die ersichtlichen Parameter sind alle zur Bestimmung des ersichtlichen geraden Kreiskegels K und damit zur geometrischen Beschreibung der herzustellenden Fläche erforderlichen Angaben vorhanden. Insbesondere ist aus der Figur ersichtlich, dass der Kegel K gegenüber einer in Z-Richtung verlaufenden Oberflächen-Normalen des Werkstücks im Raum geschwenkt ("gedreht") ist. Das heißt, eine Höhen-Linie h des geraden Kreiskegels mit dem Mittelpunkt M der Grundfläche ist nicht parallel zu der Oberflächen-Normalen des Werkstücks und damit nicht parallel zu der Z-Achse der Werkzeugmaschine ausgerichtet.

Nach Eingabe aller erforderlichen Parameter wird mittels der CNC-Steuerung vollautomatisch ein (CNC-) Teileprogramm erzeugt, welches entweder sofort auf der Werkzeugmaschine gestartet werden kann oder alternativ anhand von Benutzereingaben zur Laufzeit generiert und ausgeführt wird. Somit benötigt man keinen speziellen Post-Prozessor, wie er bei der Programm-Erstellung durch ein CAM System notwendig wäre, da hier die erforderlichen Maschineninformationen (Anzahl, Art und Lage der Achsen; maximale Verfahrbereiche der Achsen etc.) für den Algorithmus direkt verfügbar bzw. bekannt sind.

Die von dem Werkzeug relativ zu dem Werkstück abzufahrende Werkzeugbahn verläuft allgemein auf der Mantelfläche des betreffenden Kegelsegments. Im Ausführungsbeispiel handelt es sich bei dem Kegel um einen geraden Kreiskegel K und bei dem Kegelsegment um ein ringförmig geschlossenes Segment der Mantelfläche des Kegels K, das sich durch den Schnitt des Kegels K mit dem Werkstück W ergibt. Die Erfindung ist jedoch nicht auf diese Kegel- bzw. Mantelform beschränkt. Für technische Anwendungen weiterhin relevant sind insbesondere Flächen, die sich auf einen schiefen Kegel, insbesondere einen schiefen Kreiskegel beziehen. Die gesuchte Fläche ergibt sich allgemein aus dem Schnitt des betreffenden Kegels mit dem Werkstück-Rohteil (siehe FIG 5).

Bei dem Ausführungsbeispiel gemäß FIG 5, bei dem ein gerader Kreiskegel K gegenüber einer Oberflächen-Normalen des Werkstücks gedreht, das heißt im Raum geschwenkt ist, erzeugt ein Schnitt des Kegels durch eine zu der Werkstück-Oberfläche des Werkstücks W parallele Ebene eine Ellipse.

Ließe man die Zustellbewegung (Z-Richtung) außer Acht, so würden sich für die Bearbeitung elliptische Bahnen ergeben. Unter Beachtung der Zustellbewegung resultieren im Wesentlichen elliptische, spiralförmig um die Mantelfläche des betreffenden Kegelsegments verlaufende Bahnabschnitte, wie dies durch die gezeigte Kurve in Figur 5 angedeutet ist. Eine derartige Werkzeugbahn 70 (auch Bewegungsbahn oder nur Bahn genannt) ist beispielhaft auch in FIG 6 veranschaulicht, wobei die Zustellung in Z-Richtung zur Veranschaulichung wesentlich gegenüber einer einer tatsächlichen Bearbeitung entsprechenden Zustellung vergrößert dargestellt ist. Zur Bearbeitung des entsprechenden Werkstücks W muss sich daher das Werkzeug relativ zu dem Werkstück im Wesentlichen entlang elliptischer, spiralförmig verlaufender Bahnabschnitte bewegen.

Vorteilhaft wird bei dem erfindungsgemäßen Zyklus die Bewegungsbahn 70 in Form einer Vielzahl direkt aneinandergrenzenden Splines, also Polynomen höchsten n-ten Grades, beschrieben bzw. erzeugt. Dies ist besonders dann vorteilhaft, wenn derartige Splines direkt von der CNC-Steuerung verarbeitet, das heißt für die Steuerung der Relativbewegung zwischen Werkzeug und Werkstück durch Aufruf entsprechender Befehle verwendet werden können, wie dies beispielsweise bei der CNC-Steuerung SINUMERIK 840D von Siemens für Polynome bis 5-ten Grades der Fall ist. Das Ausgabeformat ist hierbei kein üblicher G-Code, der aus Geraden oder Kreissegmenten besteht, sondern ein Polynom-Code. Analog zu dem bei Teileprogrammen üblichen G-Code können so die einzelnen Programm-Anweisungen (Befehle) Satz für Satz in Form von Polynom-Aufrufen generiert und anschließend abgearbeitet werden. Der so erzeugte Spline- (Polynom-) Code ermöglicht es, dass die einzelnen Spline-Segmente "glatt" (mehrfach stetig differenzierbar) ineinander übergehen.

Die in FIG 6 veranschaulichte Bewegungsbahn 70 setzt sich aus vielen Bahnsegmenten in Form von Splines 71, also Polynomen, die mehrfach differenzierbar ineinander übergehen, zusammen. Durch den "glatten" Übergang zwischen den Splines sind der Anfang und das Ende eines einzelnen Splines 71 in der Bewegungsbahn 70 nicht zu erkennen.

Nachfolgend wird eine bevorzugte Ausführungsform bei der Bahngenerierung auf der Kegel-Mantelfläche und damit der genannten Splines beschrieben.

Für die technologische Beschreibung wird die Bahn auf dem Kegel (gedanklich) abgerollt. Dabei ist eine gewisse Zustellung pro Umdrehung zu beachten. Als Veranschaulichung kann man sich einen Kugelkopffräser vorstellen, der um die Kegelfläche rotiert und sich dabei kontinuierlich nach unten (oder oben) auf dem Kegel bewegt.

Für die Berechnung einer Umdrehung von 0° auf 360° wird beispielsweise eine Unterteilung in 32 Winkelsegmente vorgenommen. Ein Winkelsegment ist demnach 11,52° breit. Innerhalb eines Winkelsegmentes werden sechs gleichverteilte horizontale Schnitte zwischen der Starthöhe des Winkelsegmentes und der Endhöhe des Winkelsegmentes berechnet. Nachfolgend werden sechs Punkte auf den Ellipsen bestimmt. Der erste Punkt liegt auf der ersten Ellipse bei 0°. Der zweite Punkt liegt auf der zweiten Ellipse bei 2.304°. Der dritte Punkt liegt auf der dritten Ellipse bei 4,608°. Die weitern Punkte werden nach diesem Schema weiter bestimmt.

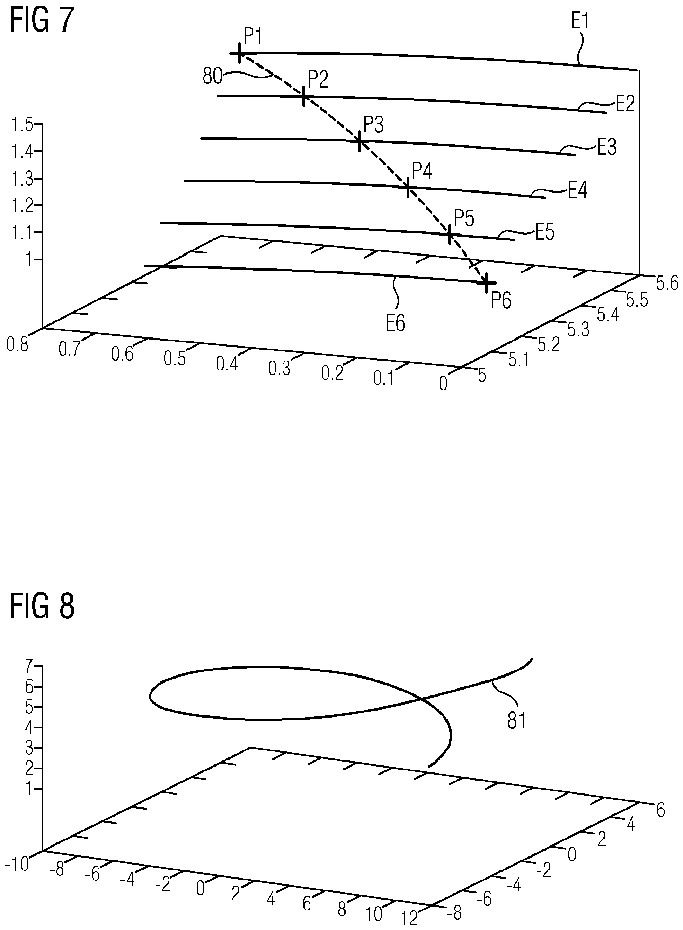

Die gezeigte Vorgehensweise wird in FIG 7 veranschaulicht. Gezeigt sind die sechs oben genannten Ellipsen-Segmente E1 bis E6 und die jeweils auf den Ellipsen-Segmenten liegenden Punkte P1 bis P6. Die auf den Ellipsen E1 bis E6 liegenden Punkte P1 bis P6 werden mit einem Spline 80 verbunden. Bei einer fortlaufenden Bestimmung der Splines für die weiteren Winkelsegmente kann die zusammenhängende Bahn für einen Umlauf um den Kegel bestimmt werden. Ein entsprechender Bahnabschnitt 81 ist in FIG 8 veranschaulicht. Viele zusammenhängende derartige Bahnabschnitte ergeben schließlich die in FIG 6 veranschaulichte Bahn 70.

Vorteilhaft erfolgt im Zusammenhang mit der Erfindung die Beschreibung der Werkzeugbahn nicht in einem kartesischen Koordinatensystem, sondern in einem für zumindest im Wesentlichen kreisförmige Bewegungen besser geeigneten Polarkoordinatensystem. Auch hierfür ist die CNC-Steuerung SINUMERIK 840D von Siemens bestens geeignet. Auch eine Koordinatentransformation zwischen den unterschiedlichen Koordinatensystemen ist bei einer Ausführungsform eines erfindungsgemäßen Zyklus möglich.

Weiterhin wird bei einer bevorzugten Ausführungsform der Erfindung bei der Bearbeitung eines Werkstücks mittels eines Werkzeugs eine an sich bekannte Werkzeugradiuskorrektur durchgeführt. Die Werkzeugradiuskorrektur erlaubt die Programmierung der Werkstückkontur unabhängig von der Geometrie des verwendeten Werkzeugs. Vorteilhaft kann daher bei der Parametrierung des Zyklus auch ein Werkzeugradius erfasst werden, der bei der Bahnerzeugung mittels der numerischen Steuerung berücksichtigt wird.

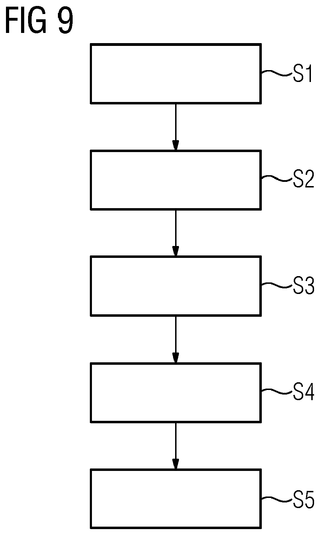

Nachfolgend werden die wesentlichen Verfahrensschritte bei der Durchführung eines erfindungsgemäßen Verfahrens nochmals in Form eines Ablaufdiagramms gemäß FIG 9 verdeutlicht.

In einem ersten Verfahrensschritt S1 wird ein ausführbarer Zyklus zur Herstellung und/oder Bearbeitung von durch ein Segment eines Kegels bestimmbarer, nicht konischer Flächen eines Werkstücks auf einer numerischen Steuerung einer mit der Steuerung verbundenen Werkzeugmaschine bereitgestellt.

In einem Verfahrensschritt S2 wird der Zyklus durch einen Benutzer der Werkzeugmaschine an einer grafischen Bedienoberfläche der numerischen Steuerung der Werkzeugmaschine aufgerufen.

In einem Verfahrensschritt S3 werden durch den Benutzer die für die Herstellung bzw. Bearbeitung der vorgesehenen Fläche des Werkstücks erforderlichen Technologie- und Geometrieangaben an der grafischen Bedienoberfläche der numerischen Steuerung eingegeben. Der Zyklus wird dadurch "Parametriert".

In einem Verfahrensschritt S4 wird unter Berücksichtigung der in Verfahrensschritt S3 getätigten Eingaben von der numerischen Steuerung ein von der numerischen Steuerung abarbeitbares Teileprogramm erzeugt und in einem Speicher der numerischen Steuerung abgelegt. Auf das Teileprogramm kann dadurch bei der Herstellung bzw. Bearbeitung baugleicher Werkstücke erneut zurückgegriffen werden.

Vorteilhaft werden bei dem so erzeugten Teileprogramm neben den üblichen G-Code-Anweisungen auch Polynom-Code-Anweisungen erzeugt, so dass sich die einzelnen Segmente der durch das Teileprogramm festgelegten Werkzeugbahn nicht nur aus Geraden und Kreissegmenten, sondern zumindest zum Teil auch aus Polynom-Segmenten (Splines) zusammensetzen.

In einem Verfahrensschritt S5 wird das so erstellte Teileprogramm auf der numerischen Steuerung und damit der Werkzeugmaschine zur Herstellung bzw. Bearbeitung der durch ein Segment eines Kegels bestimmbaren, nicht konischen Fläche des Werkstücks ausgeführt. Damit einher geht die durch das Teileprogramm festgelegte Relativbewegung zwischen dem Werkzeug und dem Werkstück.

## Patentansprüche

1. Verfahren zur Herstellung und/oder Bearbeitung einer durch ein Segment eines Kegels (50, K) bestimmbaren, nicht konischen Fläche (42, 44) eines Werkstücks (5, 41, 43, W) mittels einer Werkzeugmaschine (20), wobei die Werkzeugmaschine (20) zum Erzeugen einer Relativbewegung zwischen einem Werkzeug (1) und dem Werkstück (5, 41, 43, W) wenigstens zwei lineare Achsen (X, Y, Z) und wenigstens eine Rundachse (A, B, C) sowie eine numerische Steuerung (30) zur Ansteuerung der Achsen (X, Y, Z, A, B, C) aufweist, mit folgenden Schritten:
- Bereitstellen eines Zyklus (34) auf der numerischen Steuerung (30),
- Aufrufen des Zyklus (34) durch einen Benutzer der Werkzeugmaschine (20),
- Parametrieren des Zyklus (34) durch den Benutzer, wobei wenigstens ein den Kegel betreffender Parameter erfasst wird,
- Erzeugen eines von der numerischen Steuerung (30) abarbeitbaren Teileprogramms (33) mittels des Zyklus (34) und der numerischen Steuerung (30),
- Ausführung des Teileprogramms (33) mittels der numerischen Steuerung (30) zum Erzeugen der Relativbewegung entlang einer durch das Teileprogramm (33) bestimmten Bahn (70) zur Herstellung bzw. Bearbeitung der Fläche des Werkstücks (5, 41, 43, W).

2. Verfahren nach Anspruch 1, wobei die Fläche durch das Segment eines schiefen Kegels, insbesondere eines schiefen Kreiskegels (50) bestimmbar ist.

3. Verfahren nach Anspruch 1, wobei die Fläche durch das Segment eines Kegels, insbesondere eines geraden Kreiskegels (K), mit einer Höhen-Linie (h), die nicht parallel zu einer Werkstück-Normalen ausgerichtet ist, bestimmbar ist.

4. Verfahren nach einem der vorherigen Ansprüche, wobei die Fläche als ringförmig geschlossenes Kegelsegment (57) ausgeführt ist.

5. Verfahren nach einem der vorherigen Ansprüche, wobei eine Drehbearbeitung des Werkstücks (5, 41, 43, W) ausgeführt wird.

6. Verfahren nach einem der vorherigen Ansprüche, wobei es sich bei der Fläche um eine Dichtfläche (44) eines Verschlussteils (43) oder um eine Dichtfläche (42) eines Ventilsitzes (41) eines Absperrventils (40) handelt.

7. Verfahren nach Anspruch 6, wobei es sich bei dem Absperrventil (40) um ein exzentrisches, insbesondere mehrfach exzentrisches Absperrventil (40) handelt.

8. Verfahren nach Anspruch 7, wobei eine Ausgleichsbewegung zum Ausgleich einer Exzentrizität radial in wenigstens einer Linearachse (X) der Werkzeugmaschine (20) erfolgt.

9. Verfahren nach einem der vorherigen Ansprüche, wobei das Teileprogramm (33) zumindest teilweise in einem Polarkoordinaten-Format erzeugt wird.

10. Verfahren nach einem der vorherigen Ansprüche, wobei das Teileprogramm (33) zumindest teilweise in einem kartesischen Format erzeugt wird.

11. Verfahren nach einem der vorherigen Ansprüche, wobei geometrische Angaben zu der Fläche des Werkstücks (5, 41, 43, W) und/oder fertigungstechnische Angaben zur Herstellung bzw. Bearbeitung des Werkstücks (5, 41, 43, W) über eine an einer Anzeigevorrichtung (32) der numerischen Steuerung (30) darstellbare Zyklenmaske vom Bediener eingegeben werden.

12. Verfahren nach einem der vorherigen Ansprüche, wobei der Zyklus (34) die Bahn (70) zumindest teilweise in Form direkt aneinandergrenzender Splines (71), insbesondere Splines 5-ten Grades generiert.

13. Verfahren nach einem der vorherigen Ansprüche, wobei für das verwendete Werkzeug (1, 60) ein Werkzeugradius angebbar ist und die Erzeugung des von der numerischen Steuerung (30) abarbeitbaren Teileprogramms (33) mittels des Zyklus (34) unter Berücksichtigung dieses Radius, insbesondere in Form einer Werkzeugradiuskorrektur erfolgt.

14. Zyklus (34) für eine numerische Steuerung zur Durchführung eines Verfahrens nach einem der Ansprüche 1 bis 13.

15. Numerische Steuerung (30) mit einem Zyklus (34) nach Anspruch 14.

16. Werkzeugmaschine (20) mit einer numerischen Steuerung (30) nach Anspruch 15.
